Europäisches Patentamt

European Patent Office

Office européen des brevets

(11) Publication number: **0 145 971**
**B1**

# (12) EUROPEAN PATENT SPECIFICATION

(45) Date of publication of patent specification: **13.04.88**

(21) Application number: **84113829.0**

(22) Date of filing: **15.11.84**

(51) Int. Cl.⁴: **B 29 D 5/02, B 29 C 45/38, B 29 B 17/00**

(54) Method of and apparatus for manufacturing molded slide fastener coupling elements.

(30) Priority: **15.11.83 JP 214828/83**
**29.12.83 JP 245936/83**

(43) Date of publication of application:
**26.06.85 Bulletin 85/26**

(45) Publication of the grant of the patent:
**13.04.88 Bulletin 88/15**

(84) Designated Contracting States:
**BE CH DE FR IT LI NL SE**

(56) References cited:
**GB-A-2 008 421**
**US-A-3 672 803**
**US-A-4 336 220**

(73) Proprietor: **YOSHIDA KOGYO K.K.**
**No. 1 Kanda Izumi-cho Chiyoda-ku**
**Tokyo (JP)**

(72) Inventor: **Yoshida, Hiroshi**
**29, Horitaka**
**Kurobe-shi Toyama-ken (JP)**

(74) Representative: **Patentanwälte Leinweber &**
**Zimmermann**
**Rosental 7/II Aufg.**
**D-8000 München 2 (DE)**

Courier Press, Leamington Spa, England.

EP 0 145 971 B1

## Description

This invention relates generally to the production of slide fasteners according to the preambles of the independent claims 1 and 3, such slide fasteners having coupling or mating elements made of a thermoplastic material, and more particularly to a method and apparatus for supplying such a plastic material to a molding machine for molding the same into desired formation on a pair of stringer tapes.

Slide fastener coupling elements of a discrete formation are provided on a pair of stringer tapes most commonly by means of injection-molding, in which instance runners, sprues and other debris of the element-forming plastic material are encountered that are to be removed from the slide fastener chain.

US—A—4,336,220 on which the preambles of the independent claims 1 and 3 are based discloses a method of and apparatus for manufacturing injection molded slide fastener coupling elements comprising the step of and means for, respectively, cutting and removing runners and sprues from the rows of coupling elements immediately after the fastener chain has been withdrawn from a mold.

It has long since been desired to make use of such runners and sprues for replenishment of a supply of starting plastic materials which are versatile in obtaining homogeneous color distribution of the fastener elements of the stringer tapes due to thermal decomposition, pollution or moisture absorption of the used runners and sprues.

The present invention seeks to provide for the manufacture of slide fasteners a method and apparatus for supplying a molding machine with a composite particulate plastic material mixed up with, and consisting in such a predetermined ratio of, colored master chips, colorless slave chips and runners and sprues which will enable homogeneous color distribution of the resulting fastener element chain.

According to a first aspect of the present invention, there is provided a method for on-line reclamation of runners and sprues during the manufacture of a slide fastener chain having molded thereon rows of coupling elements made of a thermoplastic material by means of an injection molding process, comprising the step of cutting and removing runners and sprues from the rows of coupling elements immediately after the fastener chain has been withdrawn from a mold characterized by pelletizing said runners and sprues to a predetermined particle size; recycling the thus pelletized material for re-use in combination with a fresh supply of thermoplastic chips and controlling the supply of said pelletized material and said fresh supply of thermoplastic chips so that the ratio of said pelletized material to said fresh chips falls in a predetermined ratio.

According to a second aspect of the present invention, there is provided an apparatus for on-line reclamation of runner and sprues during the manufacture of a slide fastener chain having molded thereon rows of coupling elements made of a thermoplastic material, comprising in combination with an injection molding machine a cutting means disposed immediately adjacent to and downstream of a mold for cutting and removing runners and sprues from the rows of coupling elements characterized by a pelletizing means located adjacent to said cutting means for pelletizing said runners and sprues to a predetermined particle size; a first hopper for receiving and feeding the thus pelletized material; a second hopper for receiving and feeding a fresh supply of thermoplastic chips; a mixing hopper for receiving and mixing the pelletized material, and the fresh supply of thermoplastic chips from said first and second hoppers for charging to the mold a delivery means adjacent to said pelletizing means for delivering the pelletized material therefrom to said first hopper; and a controlling means associated with each of said first and second hoppers for controlling the amounts of their respective feeds to the mold so that the ratio of said pelletized material to said fresh chips falls in a predetermined ratio.

These and other features of the invention will be better understood from the following description taken in connection with preferred embodiments and in light of the accompanying drawings in which like or corresponding parts are designated by like numerals.

Figure 1 is a schematic side elevation utilized to show the general construction of an injection molding machine according to a preferred embodiment of the invention;

Figure 2 is a view analogous to Figure 1 but showing another preferred form of machine according to the invention;

Figure 3 is a plan view of a slide fastener chain that has been released from the molding machine of Figure 1; and

Figure 4 is a longitudinal cross-sectional view of a hopper part of the machine of Figure 1.

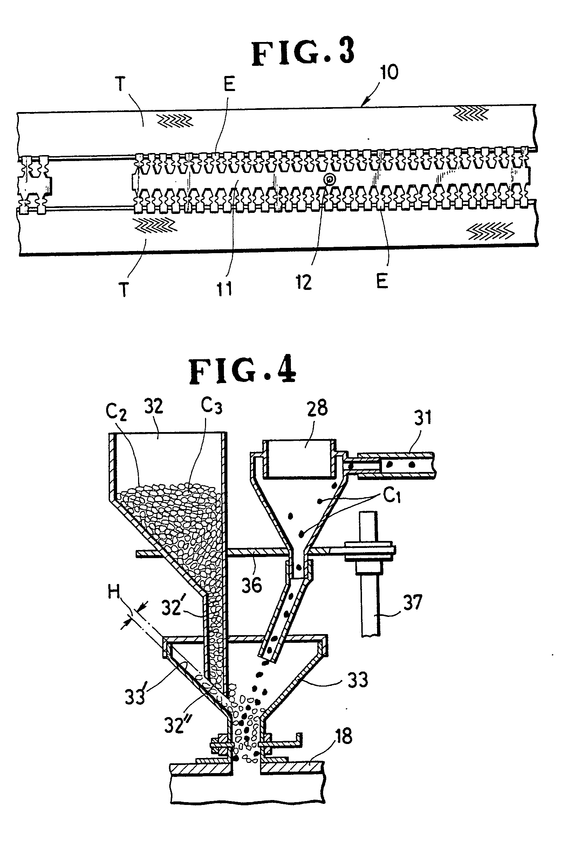

Referring first to Figure 3, there is shown a slide fastener chain 10 which comprises a pair of stringer tapes T, T' each carrying a series of discrete coupling elements E made of thermoplastic material, the coupling elements having a choice of different colors compatible with an article to which the fastener is applied. The fastener chain 10 is shown disposed immediately after it has been injection-molded and released from the mold, so that the molded elements E are still accompanied by runners 11 and sprues 12 that will be subsequently removed in a manner hereinafter described.

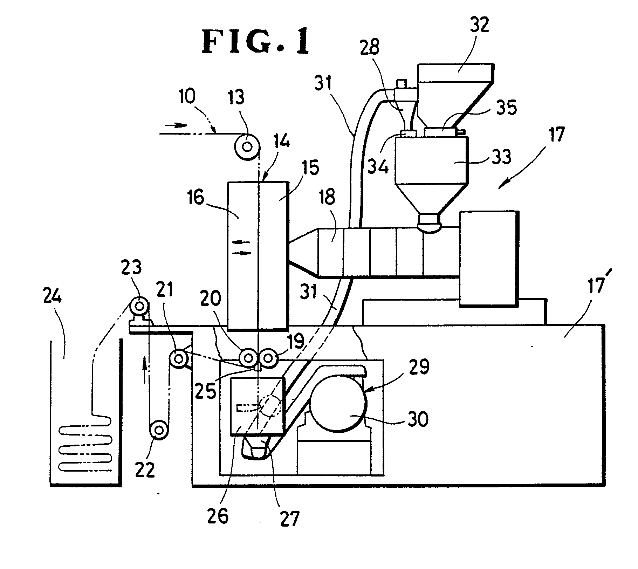

As shown in Figure 1, a starting fastener chain 10 devoid of coupling elements E (Figure 3) is passed around a guide roll 13 and into a mold 14 comprising a stationary die 15 and a movable die 16 in an injection-molding machine generally designated at 17. The machine 17 per se is of any conventional construction including a heating cylinder 18 operatively associated with the molding dies 15, 16. The fastener chain 10 after having injection-molded thereon series or rows of coupling elements E is withdrawn from the mold 14 via feed rolls 19, 20 and guide rolls 21, 22 and 23 and stored in a chamber 24 in a manner well known in the art.

Now, in accordance with the invention there is provided cutting means 25 immediately adjacent to and downstream of the mold 14 for cutting and removing runners 11 and sprues 12 (Figure 3) of other debris of the plastic material that have been formed integrally with the coupling elements E. The runners 11 and sprues 12 thus removed are taken into a pelletizer 26 located adjacent to the cutting means 25 and designed to cut them into pellets or chips $C_1$ of a desired size. These pellets or chips $C_1$ are collected in a reservoir 27 at the bottom of the pelletizer 26 and from there delivered or recycled to a first hopper 28 located above the heating cylinder 18, for which purpose there is provided a delivery means 29 comprising a fan 30 and a conduit pipe 31 communicating between the fan 30 and the first hopper 28.

Parallel with the first hopper 28 is provided a second hopper 32 for receiving a supply of colored master chips $C_2$ and colorless slave chips $C_3$, both being thermoplastic.

The first and second hoppers 28 and 32 are detachably mounted on a mixing hopper 33 and have their respective tapered bottomless ends opening into the mixing hopper 33 which in turn has its bottom open to communicate with the interior of the heating cylinder 18, the arrangement being that chips $C_2$, $C_3$ are let fall by own gravity through hopper 33 into the cylinder 18.

It has now been found that the ratio of recycled chips $C_1$ to combined fresh chips $C_2$, $C_3$ is importantly 40—60:60—40 in order to absolutely minimize reduction in physical properties of the resulting element chain E, which properties including mechanical strength and deviations or irregularities in the color of the resulting element chain E. To this end, in the embodiment shown in Figure 1, there are provided shutter means 34 and 35 for first and second hoppers 28, 32, respectively thereby maintaining a controlled rate of supply of respective chips $C_1$, $C_2$ and $C_3$. When the color of the element chain E to be manufactured is changed, the shutter means 34, 35 are fully closed and then the first and second hoppers 28, 32 are removed from the mixing hopper 33 for discharging the chips $C_1$, $C_2$, $C_3$ remaining in the respective hoppers 28, 32.

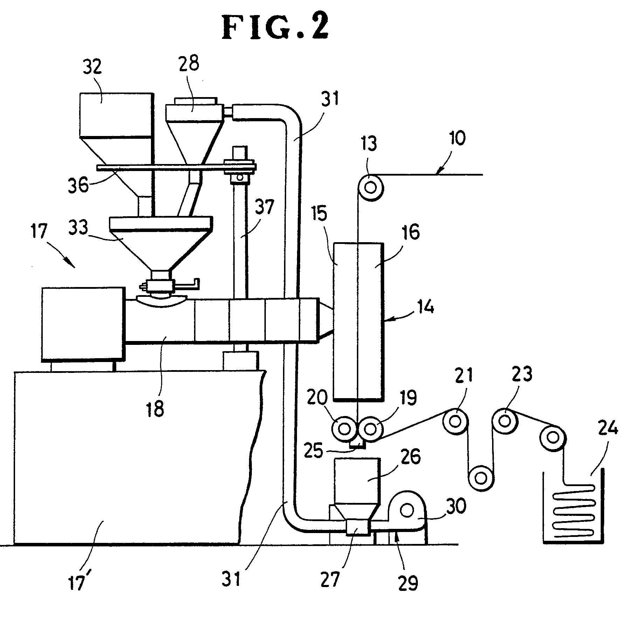

In the embodiment shown in Figures 2 and 4, the second hopper 32 for fresh chips $C_2$,$C_3$ has a reduced bottom outlet 32' with a slanted open end 32'' which lies flush with a tapered inner peripheral wall 33' of the mixing hopper 33. The slanted end 32'' of the hopper 33 is spaced a predetermined distance or clearance H apart from the peripheral wall 33' of the hopper 32 such that the inventory of fresh chips $C_2$, $C_3$ in the hopper 33 may be maintained constant with respect to a given supply of recycled chips $C_1$. There is provided a vertically movable bar 36 extending horizontally from a vertical column 37 secured to the frame 17' and being adapted to support thereon the second hopper 32. This bar 36 may be ascended to permit the hopper 32 to detach from the mixing hopper 33, or varied in position to adjust the clearance H thereby maintaining controlled inventory of fresh chips $C_2$, $C_3$ with respect to recycled chips $C_1$ depending upon the rate of molding speed of the machine. With the hoppers 28, 32, 33 thus constructed, the amount of the fresh chips $C_2$, $C_3$ with respect to the amount of the recycled chips $C_1$ is maintained constant without using a separate metering device.

An important feature of the invention resides in the concept of removing and pelletizing runners and sprues of the plastic material from the fastener chain immediately upon release from the mold and subsequently recycling pelletized chips for re-use in combination with fresh thermoplastic chips, so that such recycled chips may not undergo any substantial change in their physicochemical properties which would otherwise result in irregular or heterogeneous color distribution of the coupling elements on the finished slide fastener.

## Claims

1. A method for the manufacture of a slide fastener chain (10) having molded thereon rows of coupling elements (E) made of a thermoplastic material by means of an injection molding process, comprising the step of cutting and removing runners (11) and sprues (12) from the rows of coupling elements (E) immediately after the fastener chain (10) has been withdrawn from a mold (14); characterized by pelletizing said runners (11) and sprues (12) to a predetermined particle size for on-line reclamation; recycling the thus pelletized material ($C_1$) for re-use in combination with a fresh supply of thermoplastic chips ($C_2$, $C_3$); and controlling the supply of said pelletized material ($C_1$) and said fresh supply of thermoplastic chips ($C_2$, $C_3$) so that the ratio of said pelletized material ($C_1$) to said fresh chips ($C_2$, $C_3$) falls in a predetermined ratio.

2. A method according to claim 1, said predetermined ratio of said supply of said pelletized material ($C_1$) to said fresh supply of thermoplastic chips ($C_2$, $C_3$) being 40—60:60—40.

3. An apparatus for the manufacture of a slide fastener chain (10) having molded thereon rows of coupling elements (E) made of a thermoplastic material, comprising in combination with an injection molding machine (17) a cutting means (25) disposed immediately adjacent to and downstream of a mold (14) for cutting and removing runners (11) and sprues (12) from the rows of coupling elements (E), characterized by a pelletizing means (26) located adjacent to said cutting means (25) for pelletizing said runners (11) and sprues (12) to a predetermined particle size for on-line reclamation; a first hopper (28) for receiving and feeding the thus pelletized material ($C_1$); a second hopper (32) for receiving and feeding a fresh supply of thermoplastic chips ($C_2$, $C_3$); a

mixing hopper (33) for receiving and mixing the pelletized material ($C_1$), and the fresh supply of thermoplastic chips ($C_2$, $C_3$) from said first and second hoppers (28, 32) for charging to the mold (14); a delivery means (29) adjacent to said pelletizing means (26) for delivering the pelletized material ($C_1$) therefrom to said first hopper (28); and a controlling means (34, 35; 32') associated with each of said first and second hoppers (28, 32) for controlling the amounts of their respective feeds to the mold so that the ratio of said pelletized material ($C_1$) to said fresh chips ($C_2$, $C_3$) falls in a predetermined ratio.

4. An apparatus according to claim 3, said controlling means comprising a pair of shutters (34, 35) disposed respectively in said first and second hoppers (28, 32) and movable to control the supply of the materials from the respective hoppers (28, 32) to said mixing hopper (33).

5. An apparatus according to claim 3, said controlling means comprising a reduced bottom outlet (32') of said second hopper (32) for adjusting the feed therefrom by its own gravity.

6. An apparatus according to claim 5, said reduced bottom outlet (32') having a slanted open end (32'') lying flush with and spaced from the inner wall of the mixing hopper (33).

7. An apparatus according to claim 3, said delivery means (29) comprising a fan (30) and a conduit pipe (31) connected between the fan (30) and said first hopper (28).

8. An apparatus according to claim 3, said second hopper (32) being detachably mounted on said mixing hopper (33).

## Patentansprüche

1. Verfahren zur Herstellung einer Reißverschlußkette (10), an die Reihen von aus thermoplastischem Material hergestellten Kuppelgliedern (E) durch Spritzgießen angegossen sind, bei dem die Angüsse (11) und die Gießtrichter (12) von den Reihen von Kuppelgliedern (E) abgeschnitten und beseitigt werden, unmittelbar nachdem die Reißverschlußkette (10) aus einer Form (14) abgezogen wurde, dadurch gekennzeichnet, daß die Angüsse (11) und die Gießtrichter (12) zur laufenden Rückgewinnung auf eine bestimmte Teilchengröße zerkleinert werden, daß das auf diese Weise zerkleinerte Material ($C_1$) zur erneuten Verwendung in Verbindung mit einer Neuzufuhr von thermoplastischen Schnipseln ($C_2$, $C_3$) zurückgeführt wird, und daß die Zufuhr des zerkleinerten Materials ($C_1$) und die Neuzufuhr der thermoplastischen Schnipsel ($C_2$, $C_3$) derart gesteuert wird, daß das Verhältnis zwischen dem zerkleinerten Material ($C_1$) und den neuen Schnipseln ($C_2$, $C_3$) in ein bestimmtes Verhältnis fällt.

2. Verfahren nach Anspruch 1, dadurch gekennzeichnet, daß das bestimmte Verhältnis zwischen der Zufuhr des zerkleinerten Materials ($C_1$) und der Neuzufuhr der thermoplastischen Schnipsel ($C_2$, $C_3$) 40—60: 60—40 beträgt.

3. Vorrichtung zur Herstellung einer Reißverschlußkette (10), an die Reihen von aus thermoplastischem Kunststoff hergestellten Kuppelgliedern (2) angegossen sind, bestehend in Kombination mit einer Spritzgießmaschine (17) aus einer Schneideinrichtung (25), die unmittelbar stromabwärts von einer Form (14) angeordnet ist, um Angüsse (11) und Gießtrichter (12) von den Reihen von Kuppelgliedern (E) abzuschneiden, gekennzeichnet durch eine Zerkleinerungseinrichtung (26), die unmittelbar neben der Schneideinrichtung (25) angeordnet ist, um die Angüsse (11) und die Gießtrichter (12) zur laufenden Rückgewinnung auf eine bestimmte Teilchengröße zu verkleinern, einen ersten Trichter (28) zur Aufnahme und Zuführung des zerkleinerten Materials ($C_1$), einen zweiten Trichter (32) zur Aufnahme und Zuführung eines neuen Vorrats an thermoplastischen Schnipseln ($C_2$, $C_3$), einen Mischtrichter (33) zur Aufnahme und Vermischung des von dem ersten und dem zweiten Trichter (28, 32) zugeführten zerkleinerten Materials ($C_1$) und des neuen Vorrats an thermoplastischen Schnipseln ($C_2$, $C_3$) zum Füllen der Form (14), eine neben der Zerkleinerungseinrichtung (26) angeordnete Beschickungseinrichtung (29) zum Überführen des zerkleinerten Materials ($C_1$) zu dem ersten Trichter (28), und Steuereinrichtungen (34, 35; 32'), die jeweils dem ersten und dem zweiten Trichter (28, 32) zugeordnet sind, um die von diesen der Form zugeführten Mengen zu steuern, so daß das Verhältnis zwischen dem zerkleinerten Material ($C_1$) und den neuen Schnipseln ($C_2$, $C_3$) in ein bestimmtes Verhältnis fällt.

4. Vorrichtung nach Anspruch 3, dadurch gekennzeichnet, daß die Steuereinrichtungen aus zwei Schiebern (34, 35) bestehen, die in dem ersten bzw. zweiten Trichter (28, 32) angeordnet· und bewegbar sind, um die Zufuhr der Materialien von den betreffenden Trichtern (28, 32) zu dem Mischtrichter (33) zu steuern.

5. Vorrichtung nach Anspruch 3, dadurch gekennzeichnet, daß die Steuereinrichtung aus einem verjüngten Bodenauslaß (32') des zweiten Trichters (32) besteht, um dessen Zufuhr durch das Eigengewicht einzustellen.

6. Vorrichtung nach Anspruch 5, dadurch gekennzeichnet, daß der verjüngte Bodenauslaß (32') ein geneigtes offenes Ende (32'') hat, das im Abstand von der Innenwand des Mischtrichters (33) angeordnet und mit dieser bündig ist.

7. Vorrichtung nach Anspruch 3, dadurch gekennzeichnet, daß die Beschickungseinrichtung (29) ein Gebläse (30) und eine das Gebläse (30) mit dem ersten Trichter (28) verbindende Rohrleitung (31) umfaßt.

8. Vorrichtung nach Anspruch 3, dadurch gekennzeichnet, daß der zweite Trichter (32) auf dem Mischtrichter (33) abnehmbar angeordnet ist.

## Revendications

1. Procédé pour la fabrication d'une chaîne (10) de fermeture à glissière comportant des rangées d'éléments d'accouplement (E) moulés fabriqués en matière thermo-plastique au moyen d'un procédé de moulage par injection, comprenant l'opération consistant à couper et à retirer les jets d'alimentation (11) et les carottes (12) des rangées d'éléments (E) d'accouplement immédiatement après que la chaîne (10) de fermeture à glissière a été retirée d'un moule (14); caractérisé par le broyage en granulés desdits jets d'alimentation (11) et desdites carottes (12) pour les amener à une taille de particules fixée à l'avance en vue de leur récupération en continu, le recyclage du matériau ($C_1$) ainsi broyé pour se réutilisation en combinaison avec une alimentation en nouveaux granulés ($C_2$—$C_3$) de matière thermo-plastique, et la commande de l'alimentation en dit matériau ($C_1$) broyé et en dits nouveaux granulés ($C_2$, $C_3$) de matière thermo-plastique, de telle sorte que le rapport entre ledit matériau broyé ($C_1$) et lesdits nouveaux granulés ($C_2$, $C_3$) corresponde à un rapport fixé à l'avance.

2. Procédé selon la revendication 1, ledit rapport fixé à l'avance entre l'alimentation en dit matériau broyé ($C_1$) et l'alimentation en nouveaux granulés ($C_2$, $C_3$) de matière thermo-plastique étant de 40—60 à 60—40.

3. Appareil pour la fabrication d'une chaîne (10) de fermeture à glissière comportant des rangées d'éléments (E) d'accouplement fabriqués en matière thermo-plastique, comprenant en combinaison avec une machine (17) de moulage par injection, un moyen de coupe (25) disposé à proximité immédiate et en aval d'un moule (14), destiné à couper et à enlever les jets d'alimentation (11) et les carottes (12) des rangées d'éléments (E) d'accouplement, caractérisé par un moyen (26) de broyage, situé à proximité dudit moyen de coupe (25) destiné à broyer en granulés lesdits jets d'alimentation (11) et lesdites carottes (12) pour les amener à un taille de particule fixée à l'avance pour une recupération continu; une première trémie (28) destinée à recevoir et à fournir le matériau ($C_1$) ainsi broyé; une seconde trémie (32) destinée à recevoir et à fournir une alimentation en nouveaux granulés ($C_2$, $C_3$) de matière

thermo-plastique; une trémie mélangeuse (33) destinée à recevoir et à mélanger le matériau broyé ($C_1$) et l'alimentation en nouveaux granulés ($C_2$, $C_3$) provenant de la première et de la seconde trémie (28, 32) destinée au remplissage du moule (14); un moyen de distribution (29) adjacent audit moyen (26) de broyage, destiné à distribuer le matériau broyé ($C_1$) de ce dernier à ladite première trémie (28), et un moyen (34, 35; 32') de commande associé avec chacune desdites première et seconde trémies (28, 32) et destiné à commander les quantités respectivement fournies au moule par ces dernières, de telle sorte que le rapport entre ledit matériau ($C_1$) broyé et les granulés ($C_2$, $C_3$) nouveaux corresponde à un rapport fixé à l'avance.

4. Appareil selon la revendication 3, ledit moyen de commande comprenant une paire de volets (34, 35) disposés respectivement dans la première et la seconde trémie (28, 32) et susceptibles d'être déplacés pour commander l'alimentation en matériaux en provenance des trémies respectives (28, 32) dans la trémie mélangeuse (33).

5. Appareil selon la revendication 3, ledit moyen de commande comprenant au fond un conduit de sortie (32') de section réduite de ladite seconde trémie (32) destinée à régler l'alimentation qui en provient grâce à sa gravité propre.

6. Appareil selon la revendication 5, ledit conduit de sortie (32') du fond à section réduite ayant une extrémité ouverte oblique (32'') est de niveau avec la paroi intérieure de la trémie mélangeuse (33) avec un certain espace par rapport à celle-ci.

7. Appareil selon la revendication 3, ledit moyen de distribution (29) comprenant un ventilateur (30) et un tuyau (31) formant conduit reliant le ventilateur (30) et ladite première trémie (28).

8. Appareil selon la revendication 3, ladite seconde trémie (32) étant installée de façon montable sur ladite trémie mélangeuse (33).

# FIG. 1

# FIG.2

# FIG.3

# FIG.4